**Europäisches Patentamt**

**European Patent Office**

**Office européen des brevets**

(19)

(11) Veröffentlichungsnummer: **0 035 120**
A2

# EUROPÄISCHE PATENTANMELDUNG

(12)

(21) Anmeldenummer: 81100676.6

(22) Anmeldetag: 30.01.81

(51) Int. Cl.³: **H 02 H 3/33**, H 02 H 3/17

(30) Priorität: **27.02.80 DE 3007227**

(43) Veröffentlichungstag der Anmeldung: **09.09.81**
**Patentblatt 81/36**

(84) Benannte Vertragsstaaten: **AT BE DE FR GB IT NL**

(71) Anmelder: **SCHUPA ELEKTRO-GMBH + CO KG,**
**Postfach 1460 Klagebach 40, D-5885 Schalksmühle (DE)**

(72) Erfinder: **Meyer, Richard, Riemerschmidstrasse 14,**
**D-5800 Hagen (DE)**

(54) **Hochempfindlicher, allstromsensitiver Fehlerstromschutzschalter.**

(57) Die Erfindung betrifft einen hochempfindlichen, allstromsensitiven Fehlerstromschutzschalter, der insbesondere in der elektrischen Hausinstallationstechnik und Verbrauchernetzen Verwendung findet. Die Schaltung dient zur Erkennung von Fehlerströmen beliebigen Kurvenverlaufs, sowie zur Erkennung von lastseitigen, niederohmigen Verbindungen zwischen Nulleiter und Schutzleiter. Hierbei wird die von einem Taktgenerator (1) erzeugte Frequenz der Sekundärwicklung (3) eines Summenstromwandlers (2) zugeführt, deren Ausgang mit einem Spannungsteiler (6) beschaltet ist, durch den der Taktstrom symmetriert wird. Über eine Wicklungsanzapfung (4) wird das getaktete Signal einer Vergleichsschaltung (7, 8) zugeführt, wobei es mit jeweils einer Referenzspannung verglichen wird. Bei über- und/oder Unterschreitung des Signals schaltet der Vergleicher (7) und/oder (8), wodurch das Auslöserelais (12) aktiviert wird. Ein RC-Glied 10 dient mit nachgeschaltetem Vergleicher (11) zur Abblockung parasitärer Störspitzen.

- 1 -

## Hochempfindlicher, allstromsensitiver Fehlerstromschutzschalter

Die Erfindung betrifft einen hochempfindlichen, allstromsensitiven Fehlerstromschutzschalter gemäß dem Oberbegriff des Anspruches 1.

Das Anwendungsgebiet der Erfindung ist in der elektrischen Haus-Installationstechnik und Verbrauchernetzen zu sehen, in denen Gleichfehlerströme oder Wechselfehlerströme mit Gleichstromanteilen auftreten können, wobei mit Hilfe der vorgeschlagenen Schaltungsanordnung die Erkennung von Fehlerströmen beliebigen Kurvenverlaufs, sowie die Erkennung von lastseitigen Kurzschlüssen zwischen Nulleiter und Schutzleiter ermöglicht wird.

Aus der DE-AS 25 25 255 ist beispielsweise eine Einrichtung zur Erfassung von Fehlerströmen einer beliebigen Stromart bekannt, deren Meßanordnung ein oder zwei Magnetkerne und mindestens je eine Vormagnetisierungswicklung und eine Sekundärwicklung aufweist. Eine solche Einrichtung ist vom Schaltungsaufbau aber auch vom Aufwand der Magnetkerne sehr aufwendig.

Der Erfindung liegt die Aufgabe zugrunde, für einen hochempfindlichen und allstromsensitiven Fehlerstromschutzschalter eine Schaltung zur Erkennung von Fehlerströmen beliebigen Kurvenverlaufs, sowie die Erkennung von lastseitigen niederohmigen Verbindungen zwischen Nulleiter und Schutzleiter zu entwickeln, einen Fehlerstromschutzschalter zu schaffen, der gegenüber den bekannten Lösungen weniger aufwendig ist.

Diese Aufgabe wird erfindungsgemäß durch die im Kennzeichen des Anspruches 1 angegebenen Maßnahmen gelöst.

Ein Ausführungsbeispiel der Erfindung ist in den Zeichnungen dargestellt. Es zeigen:

Figur 1 das Schaltschema eines Ausführungsbeispiels nach der Erfindung und

Figur 2 das Schaltschema eines zweiten Ausführungsbeispiels einer Schaltungsanordnung nach der Erfindung

Figur 3 Erkennung einer niederohmigen Verbindung zwischen Nulleiter und Schutzleiter.

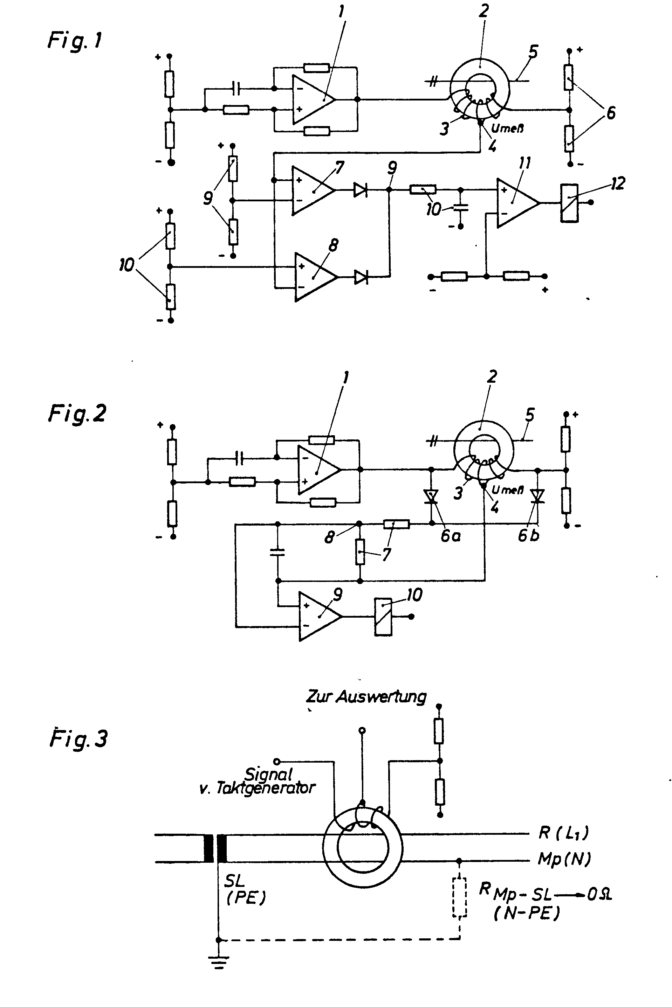

In den Figuren 1 und 2 sind die Schaltungsanordnungen für einen Fehlerstromschutzschalter dargestellt. Diese Schaltungen können wegen des Vorteils der Auswertung von Fehlerströmen und Erkennung von Kurzschluß zwischen Nulleiter und Schutzleiter hinter dem Fehlerstromschutzschalter ohne zusätzliche Mittel mit nur einem Kern und einer Sekundärwicklung mit einer Anzapfung als besonders fortschrittlich und wirtschaftlich angesehen werden.

Gemäß Figur 1 wird die von einem Taktgenerator 1 erzeugte Frequenz der Sekundärwicklung 3 eines Summenstromwandlers 2 zugeführt, deren Ausgang mit einem Spannungsteiler 6 beschaltet ist, durch den der Taktstrom symmetriert wird.

Die an der Anzapfung 4 der Sekundärwicklung 3 anstehende, dem Strom durch die Sekundärwicklung proportionale Spannung, wird auf je einen Eingang von zwei Vergleichern 7 und 8 gegeben. Beide Vergleicher sind eingangsseitig jeweils noch mit den Ausgängen zweier Spannungsteiler 9 und 10 verbunden. Durch den Einfluß eines Fehlerstromes mit beliebigem Kurvenverlauf, der über die Primärwicklung 5 des Summenstromwandlers geführt wird, ändern sich die Strom- und Spannungsverhältnisse an der Anzapfung 4, bedingt durch die in der Sekundärspule 3 hervorgerufene Induktivitätsänderung. In Abhängigkeit davon ändert sich die Spannung U-$_{meß}$ am Punkt 4 in Frequenz und/oder Amplitude. Bei ausreichend großer Veränderung der Spannung U-$_{meß}$ gegenüber den Spannungen aus den Spannungsteilern 9 und 10 geht ein oder beide Vergleicher 7 bzw. 8 vom Ruhe- in den Arbeitszustand über. Das ausgangsseitig der Vergleicher 7 und 8 an Punkt 13 zur Verfügung stehende Signal wird über ein vom versorgenden Netz herrührenden, die Störspitzen abblockendes R-C-Glied 10 auf einen weiteren Vergleicher 11 geführt. Ausgangsseitig ist dieser Vergleicher mit dem Eingang des Auslöserelais 12 verbunden.

Bei einer weiteren Ausführungsform der Erfindung gemäß Figur 2 wird, wie eingangs an Figur 1 beschrieben, die von einem Taktgenerator 1 erzeugte Frequenz der Sekundärwicklung 3 eines Summenstromwandlers 2 zugeführt. Die unter der Anzapfung 4 und dem Anfang und dem Ende der Sekundärwicklung 3 anstehende, dem Strom proportionale Spannung wird mittels der Dioden 6-a und 6-b in einer Mittelpunktschaltung gleichgerichtet. Das an Punkt 8 des Spannungsteilers 7 anstehende Signal wird auf die Eingänge eines Vergleichers 9 gegeben, der bei ausreichend großem Eingangssignal ausgangsseitig das Auslöserelais 10 betätigt. Zur Erhöhung der Störsicherheit kann auch an den Ausgang des Vergleichers 9 das in Figur 1 beschriebene R-C-Glied 10 mit dem Vergleicher 11 nachgeschaltet werden.

Schließlich wird in Figur 3 dargestellt, wie bei einem lastseitigen Kurzschluß zwischen Nulleiter und Schutzleiter der Magnetkern bedämpft wird. Die dadurch bedingte Induktivitätsänderung wird in der nachfolgenden Auswerteschaltung entsprechend den Figuren 1 oder 2 wie ein Fehlerstrom ausgewertet und führt zur Abschaltung des Fehlerstromschutzschalters.

Patentanspruch

1. Hochempfindlicher, allstromsensitiver Fehlerstromschutzschalter, bestehend aus einem Summenstromwandler, welcher einen Magnetkern besitzt, der einen die Primärwicklung darstellenden Draht umschließt und mit einer Sekundärwicklung zum Anschluß an eine Schaltung zur Erkennung von Fehlerströmen und/oder einem Kurzschluß zwischen Nulleiter und Schutzleiter, dadurch gekennzeichnet, daß ein Fehlerstrom beliebigen Kurvenverlaufs in der Primärwicklung (5) eines Summenstromwandlers (2) und/oder ein Kurzschluß zwischen Nulleiter und Schutzleiter hinter dem Fi-Schalter in der Sekundärwicklung des gleichen Summenstromwandlers (2) eine Induktivitätsänderung bewirken, wodurch das an einer Anzapfung (4) der Sekundärwicklung (3) anstehende, von einem Taktgenerator (1) erzeugte Signalfrequenz- und/oder amplitudenmoduliert wird, und einer Vergleichselektronik zugeführt wird, deren Ausgangssignal zur Auslösung des Auslösemagneten benutzt wird, wobei nach Figur 1 die Auswertung eines positiven oder negativen Fehlerstromes durch einen Vergleicher (7) und/oder (8) erfolgt, nach Figur 2 das gleichgerichtete Meßsignal einem Vergleicher (9) zugeführt wird.

0035120

Fig. 1

Fig. 2

Fig. 3

Zur Auswertung

Signal
v. Taktgenerator

SL
(PE)

R (L₁)

Mp(N)

$R_{Mp-SL} \longrightarrow 0\,\Omega$
(N-PE)